# EUROPÄISCHE PATENTANMELDUNG

(11) **EP 3 495 979 A1**
(43) Veröffentlichungstag der Anmeldung: **12.06.2019**
(21) Anmeldenummer: 17206180.6
(22) Anmeldetag: 08.12.2017
(51) Int. Cl.: G06F 21/57, H04L 9/06

(54) **VERFAHREN UND BESTÄTIGUNGSVORRICHTUNG ZUR INTEGRITÄTSBESTÄTIGUNG EINES SYSTEMS**

(71) Anmelder: Siemens Aktiengesellschaft, 80333 München (DE)
(72) Erfinder: Falk, Dr. Rainer, 85586 Poing (DE)

(57) **Zusammenfassung**

Die Erfindung betrifft ein Verfahren zur rechnergestützten Prüfung und Bestätigung mindestens eines Systemzustands eines ersten Systems (1) durch eine Bestätigungsvorrichtung (2). Die Bestätigungsvorrichtung (2) stellt nach der Prüfung einer ersten Integritätsinformation, die das erste System (1) bereitstellt, eine zweite, zusammengefasste Integritätsinformation aus und bestätigt diese kryptografisch. Die zweite Integritätsinformation umfasst erfindungsgemäß mindestens einen Teil der ersten Integritätsinformation und kann einem zweiten System (3) übermittelt werden, um diesem die Integrität des ersten Systems (1) zu bestätigen. Die Erfindung betrifft außerdem eine Bestätigungsvorrichtung (2), ein erstes System (1), ein zweites System (3) und ein Computerprogrammprodukt, um die Schritte des Verfahrens durchzuführen.

## Beschreibung

Die Erfindung betrifft ein Verfahren zur rechnergestützten Prüfung und kryptografischen Bestätigung mindestens eines Systemzustands eines ersten Systems durch eine Bestätigungsvorrichtung.

Es ist bekannt, dass ein erstes System, insbesondere ein Computersystem, eine Integritätsinformation ermittelt und diese gegenüber einem zweiten Computersystem kryptographisch geschützt bestätigt. Dies wird auch als Attestierung oder Integritätsattestierung bezeichnet. Damit kann das zweite Computersystem erkennen, ob das erste Computersystem sich in einem vertrauenswürdigen Zustand befindet, d.h. beispielsweise vertrauenswürdige Software geladen hat oder ein Virus-Scanner aktiviert ist. Für die Integritätsattestierung sind vertrauenswürdige Plattformmodule, auch als Trusted Platform Modules, kurz TPM, bezeichnet, bekannt, welche insbesondere von Linux Integrity Measurement Architecture, kurz IMA, verwendet werden.

Die Integrität eines Systems kann in Form eines Integritätswerts erfasst werden, der von einem Plattformkonfigurationsregister, auch als Platform Configuration Register bezeichnet, ausgestellt wird. Der Integritätswert wird hierbei üblicherweise über eine kryptografische Hash-Funktion, wie z.B. den Secure-Hash-Algorithmus SHA-1 oder SHA-256, über mindestens einen Messwert eines Systemzustands, gebildet. Um den Integritätswert eines Systems auch inhaltlich zu prüfen, ist eine Information, wie der Messwert zustande kam bzw. wie die Messung durchgeführt wurde, erforderlich. Diese zusätzliche Information, z.B. ein Dateiname oder eine Software, kann ebenfalls bereitgestellt werden. Zum Beispiel ist dies in der Linux Integrity Measurement Architecture umgesetzt. Bei der Linux Integrity Measurement Architecture wird die gesamte Messinformation zusätzlich zu einem Integritätswert bereitgestellt, um den Integritätswert auch inhaltlich überprüfen zu können. Alle Messwerte und dazugehörigen Messinformationen werden dazu in einer Liste, z.B. einer sogenannten IMA-Datei, erfasst. Diese Bereitstellung von detaillierter Information über ein System kann insbesondere bei einem industriellen Datenaustausch nicht erwünscht sein.

Die gegenseitige Attestierung der Integrität wurde u.a. für industrielle Datengateways für einen industriellen Datenaustausch, oder auch Industrial Data Space, kurz IDS, vorgeschlagen. Beim Austausch von teils vertraulichen Daten über Datengateways ist es wünschenswert, dass ein Gateway vor einem Datenaustausch die Vertrauenswürdigkeit eines anderen Gateways prüfen kann. Diese Anwendung kann als Peer-to-Peer-Szenario verstanden werden, bei dem zwei gleichartige Datengateways sich gegenseitig die Integrität bestätigen. Bekannte Anwendungen einer Attestierung gehen dagegen von einer Client-Server-Beziehung aus, d.h. ein Client bestätigt seine Integrität gegenüber einem als vertrauenswürdig angenommenen Server. Denkbar sind auch weitere Datenaustauschverfahren.

Es stellt sich daher die Aufgabe, eine Möglichkeit zu finden, die Integrität eines Systems zu überprüfen und kryptografisch zu bestätigen ohne vertrauliche Informationen preiszugeben.

Die Aufgabe wird durch die in den unabhängigen Ansprüchen beschriebenen Maßnahmen gelöst. In den abhängigen Ansprüchen sind vorteilhafte Weiterbildungen der Erfindung dargestellt.

Gemäß einem ersten Aspekt betrifft die Erfindung ein Verfahren zur rechnergestützten Prüfung und kryptographischen Bestätigung mindestens eines Systemzustands eines ersten Systems durch eine Bestätigungsvorrichtung mit den Verfahrensschritten:
- Erfassen einer ersten Integritätsinformation des ersten Systems, die einen Integritätswert, mindestens einen Messwert und mindestens eine Messinformation umfasst, wobei
   - bei mindestens einer Messung des mindestens einen Systemzustands der mindestens eine Messwert und die mindestens eine Messinformation erfasst werden,
   - der Integritätswert abhängig von dem mindestens einen Messwert gebildet wird,
   - der Integritätswert durch ein erstes Vertrauensmodul des ersten Systems kryptographisch bestätigt wird,
- Übertragen der ersten Integritätsinformation an die Bestätigungsvorrichtung,
- Prüfen der ersten Integritätsinformation in der Bestätigungsvorrichtung gegenüber einer ersten Prüfvorschrift,
- Bereitstellen einer zweiten Integritätsinformation, die mindestens einen Teil der ersten Integritätsinformation umfasst,
   und
- kryptographisches Bestätigen der zweiten Integritätsinformation durch ein zweites Vertrauensmodul in der Bestätigungsvorrichtung.

Das Verfahren ist vorteilhaft, da insbesondere eine zweite Integritätsinformation bereitgestellt wird, die mindestens einen Teil der ersten Integritätsinformation umfasst. Somit wird vorzugsweise lediglich ein Teil der ersten Integritätsinformation bereitgestellt.

Diese Umsetzung ist möglich, da in der Bestätigungsvorrichtung eine Auswertung, d.h. Prüfung, der ersten Integritätsinformation durchgeführt wird. Es wird vorzugsweise die kryptografische Gültigkeit des Integritätswerts und anhand der Messwerte und Messinformationen die Konfiguration des ersten Systems geprüft. Daraufhin wird in der Bestätigungsvorrichtung eine zweite Integritätsinformation, die Teile der ersten Integritätsinformation umfasst, bereitgestellt. Die beschriebene Integritätsbestätigung des ersten Systems erfolgt folglich mehrstufig. Dies ist insbesondere wünschenswert, wenn in der ersten Integritätsinformation sensible Informationen enthalten sind, welche z.B. nicht gegenüber Dritten offengelegt werden sollen.

Vorzugsweise kann bei diesem Verfahren die Bestätigungsvorrichtung eine erste Integritätsinformation des ersten Systems gegenüber einer erste Prüfvorschrift prüfen und daraufhin eine zweite Integritätsinformation ausstellen. Die erste Prüfvorschrift kann beispielsweise eine vorgegebene, erwartete Konfiguration des ersten Systems sein. Die erste Integritätsinformation umfasst einen Integritätswert, der abhängig von dem mindestens einen Messwert gebildet und anschließend bestätigt wird, und mindestens diesen Messwert und dazugehörige Messinformation. Beispielsweise können der mindestens eine Messwert und die dazugehörige Messinformation in einer Liste, z.B. einer sogenannten IMA Measurement List, gespeichert sein.

Ein System kann insbesondere ein Computersystem, ein Softwaresystem oder eine virtuelle Maschine sein. Insbesondere kann ein System mindestens einen Prozessor, mindestens eine Speichereinheit, oder mindestens eine Signalprozessor umfassen. Es kann unter "rechnergestützt" im Zusammenhang mit der Erfindung beispielsweise eine Implementierung des Verfahrens verstanden werden, bei dem insbesondere ein Prozessor mindestens einen Verfahrensschritt des Verfahrens ausführt.

Ein Systemzustand eines Systems gibt insbesondere einen bestimmten, z.B. zu einem Zeitpunkt, gegebenen Zustand der Soft- und/oder Hardware des Systems an. Dies kann beispielsweise das Vorhandensein einer installierten Software oder ein laufendes Betriebssystem sein.

Eine Messung eines Zustands kann beispielsweise durch eine Software erfolgen, welche einen Messwert zurückgibt. Die Messinformation zum Messwert umfasst beispielsweise Informationen zur Software, die die Messung durchführt. Eine Software, die die Messung durchführt, wird auch als Root of Trust for Measurement bezeichnet.

Die Prüfung der Integrität eines Systems ergibt beispielsweise, ob sich ein System in einem vertrauenswürdigen Zustand befindet, z.B. einen bestimmten erforderlichen Virenscanner geladen haben. Die Integrität kann in einem Integritätswert beschrieben werden, welcher gegenüber einer Prüfvorschrift geprüft werden kann. Beispielsweise kann eine Prüfvorschrift einen vorbestimmten Wert umfassen mit dem der Integritätswert verglichen wird. Der Integritätswert wird abhängig von mindestens einem Messwert gebildet. Insbesondere wird der Integritätswert über eine Hash-Funktion, die auf den mindestens einen Messwert angewandt wird, gebildet. Der Integritätswert wird vorzugsweise rekursiv über eine Mehrzahl oder eine Vielzahl von Messwerten gebildet.

Die Konfiguration eines Systems umfasst beispielsweise zusätzliche Informationen über Zustände oder geladener Software. Um eine Konfiguration eines Systems zu prüfen, ist insbesondere die Messinformation notwendig. Der Integritätswert ist insbesondere nicht ausreichend, um Details der Konfiguration eines Systems zu ermitteln.

Die Bestätigung des Integritätswerts im ersten System kann beispielsweise durch eine kryptografische Prüfsumme eines Vertrauensmoduls, z.B. einem vertrauenswürdigen Plattformmodul, erfolgen. In der Bestätigungsvorrichtung wird beispielsweise die kryptografische Signatur des bestätigten Integritätswerts auf mathematische Korrektheit, Gültigkeit und Anwendbarkeit eines zugeordneten Zertifikates überprüft und damit insbesondere die Integrität des ersten Systems validiert. Anhand der Messwerte und Messinformationen der ersten Integritätsinformation kann das erste System von der Bestätigungsvorrichtung auch inhaltlich geprüft werden, z.B. ob bestimmte Software geladen ist. Es kann eine Überprüfung, ein sogenanntes Whitelisting, erfolgen, ob ausschließlich vertrauenswürdige Software geladen ist, die gemäß einer vorgegebenen Konfigurationsinformation einer Weißen Liste, auch Whitelist genannt, als zulässig gilt. Eine Weiße Liste oder auch Positivliste umfasst beispielsweise vertrauenswürdige Software. Eine solche Whitelist-Konfigurationsinformation kann insbesondere einen Dateinamen und einen kryptographischen Hash-Wert von zugelassenen Software-Modulen umfassen. Somit findet durch die Bestätigungsvorrichtung eine Auswertung oder inhaltliche Prüfung der Konfiguration des ersten Systems statt. Die Bestätigungsvorrichtung stellt nach der Prüfung eine zweite Integritätsinformation bereit, welche beispielsweise durch eine digitale Signatur bestätigt wird. Die zweite Integritätsinformation umfasst vorzugsweise nicht sensible, zugelassene oder benötigte Information über die Integrität des ersten Systems und kann insbesondere dem ersten System zuordenbar sein. Dies ist insbesondere vorteilhaft, da einfache Gateways oft die detaillierte erste Integritätsinformation nicht praktikabel auswerten können.

In einer vorteilhaften Ausführungsform des Verfahrens umfasst die zweite Integritätsinformation eine Zusammenfassung und/oder Verallgemeinerung der ersten Integritätsinformation.

In anderen Worten die zweite Integritätsinformation stellt beispielsweise lediglich eine verallgemeinerte oder abstrahierte Version oder eine Zusammenfassung der ersten Integritätsinformation dar. Dies ist vorteilhaft, da beispielsweise die Rechenzeit für die Prüfung verringert wird. So kann beispielsweise in der ersten Integritätsinformation eine detaillierte Information über die Konfiguration des ersten Systems enthalten sein, welche in reduzierter Form als zweite Integritätsinformation von der Bestätigungsvorrichtung ausgegeben wird. Insbesondere kann eine Zusammenfassung nach einer inhaltlichen Auswertung der ersten Integritätsinformation erfasst werden. Dies ist insbesondere bei industriellen Komponenten bzw. Gateways vorteilhaft, die nur selten neu gestartet (Re-Boot) werden, z.B. im Normalfall höchstens jährlich in einem festen Wartungsfenster. Bei solchen Komponenten wächst die erste Integritätsinformation während der Betriebsdauer der Komponente immer weiter an.

In einer vorteilhaften Ausführungsform des Verfahrens wird die bestätigte zweite Integritätsinformation dem ersten System bereitgestellt und im ersten System gegenüber einer zweiten Prüfvorschrift geprüft.

Die zweite, vorzugsweise verallgemeinerte, Integritätsinformation umfasst notwendige Attestierungsinformationen welche dem ersten System bereitgestellt werden können. Damit kann das erste System beispielsweise gegenüber einer zweiten Prüfvorschrift, z.B. mathematische Gültigkeit einer Signatur, die eigene Integrität prüfen. Es ist folglich insbesondere keine Prüfung von vielen einzelnen Messungen nötig, wie bei der ersten Integritätsinformation. Wenn eine gültige Integritätsbestätigung vorliegt, kann das erste System beispielsweise eine Schnittstelle für eine Datenübertragung freigeben.

In einer vorteilhaften Ausführungsform des Verfahrens wird die bestätigte zweite Integritätsinformation einem zweiten System bereitgestellt und im zweiten System gegenüber einer dritten Prüfvorschrift geprüft.

Die zweite Integritätsinformation kann beispielsweise einem zweiten System, z.B. einem Peer-Knoten bei einem industriellen Datenaustausch, bereitgestellt werden. Die Bestätigungsvorrichtung übernimmt die Prüfung und Bestätigung der Integrität des ersten Systems. Das Ergebnis der Prüfung als zweite Integritätsinformation wird vorzugsweise an das zweite System übermittelt. Die zweite Integritätsinformation kann in abstrahierter Form dem zweiten System bestätigen, dass sich das erste System in einem vertrauenswürdigen Systemzustand befindet. Wenn die Prüfung gegenüber der dritten Prüfvorschrift ergibt, dass z.B. das erste System nicht in eine geforderte Systemkonfiguration aufweist, kann das zweite System beispielsweise eine Schnittstelle zur Kommunikation mit dem ersten System deaktivieren.

In einer vorteilhaften Ausführungsform des Verfahrens erkennt die Bestätigungsvorrichtung Schwachstellen des ersten Systems anhand der ersten Integritätsinformation und übermittelt eine Information über die Schwachstelle an das erste System.

Es können vorzugsweise Schwachstellen des ersten Systems, wie z.B. veraltete Softwareversionen, bei der Prüfung der ersten Integritätsinformation in der Bestätigungsvorrichtung erkannt werden. Beispielsweise kann die Bestätigungsvorrichtung bei der inhaltlichen Prüfung gegenüber einer ersten Prüfvorschrift feststellen, ob das erste System sich nicht in einem vertrauenswürdigen Zustand befindet, d.h. beispielsweise Schwachstellen aufweist. Insbesondere kann in der Bestätigungsvorrichtung eine zweite Integritätsinformation ausgestellt werden, die die Integritätsbestätigung des ersten Systems für nicht gültig erklärt. Wenn beispielsweise keine gültige Integritätsbestätigung von der Bestätigungsvorrichtung vorliegt, kann das erste System Gegenmaßnahmen einleiten, wie z.B. eine oder mehrere Netzwerkschnittstelle sperren oder installierte Applikationen beenden oder deinstallieren.

In einer vorteilhaften Ausführungsform des Verfahrens wird die erste Integritätsinformation in der Bestätigungsvorrichtung abhängig von einem zweiten System, dem die zweite Integritätsinformation bereitgestellt wird, geprüft und die zweite Integritätsinformation wird abhängig vom zweiten System ausgegeben.

Vorzugsweise wird die erste Integritätsinformation derart zusammengefasst und als zweite Integritätsinformation bereitgestellt, dass sie Anforderungen eines zweiten Systems, dem sie bereitgestellt werden soll, genügt. In anderen Worten, dem zweiten System werden lediglich Informationen über das erste System mitgeteilt, für das es beispielsweise Berechtigungen hat. Es wird zunächst die erste Integritätsinformation in der Bestätigungsvorrichtung abhängig vom zweiten System, z.B. eines Systemzustands des zweiten Systems, geprüft. Beispielsweise kann sich das zweite System in einem Wartungszustand befinden. Die Bestätigungsvorrichtung erstellt folglich insbesondere eine zweite Integritätsinformation, die z.B. von der Art, dem Systemzustand oder von Berechtigungen des zweiten Systems abhängen. Vorzugsweise liegen der Bestätigungsvorrichtung Informationen über das zweite System vor, so dass die Integritätsprüfung und Integritätsbestätigung des ersten Systems abhängig vom zweiten System erstellt werden kann.

In einer vorteilhaften Ausführungsform des Verfahrens wird die zweite Integritätsinformation zusammen mit einer Nonce durch ein zweites Vertrauensmodul in der Bestätigungsvorrichtung bestätigt.

Es kann insbesondere in die kryptografische Bestätigung der zweiten Integritätsinformation eine Nonce, z.B. ein Zufallswert, eingehen. Die Nonce kann beispielsweise von der Bestätigungsvorrichtung oder vom zweiten System, dem die zweite Integritätsinformation übermittelt wird, bereitgestellt werden. Dies ist vorteilhaft, da die zweite Integritätsinformation somit insbesondere Information über die an der Kommunikation beteiligten Systeme enthält. Damit kann beispielsweise eine eindeutige Zuordnung erfolgen; in anderen Worten, die zweite Integritätsinformation wird durch die Nonce dem zweiten System zugeordnet.

In einer vorteilhaften Ausführungsform des Verfahrens wird der Integritätswert über Messungen des Systemzustands des ersten Systems und über mindestens eine Nonce gebildet.

Ein Integritätswert des ersten Systems wird beispielsweise abhängig von einzelnen Messwerten jeweils eines Systemzustands gebildet. Die Berechnung des Integritätswerts erfolgt beispielsweise mittels einer Hash-Funktion. Abhängig von den Messungen wird der Integritätswert aktualisiert, wobei die Messungen nacheinander verarbeitet werden. Ein Vertrauensmodul des ersten Systems bestätigt den Integritätswert kryptografisch. Vorzugsweise wird der Integritätswert über die Messungen und mindestens eine Nonce, z.B. ein Zufallswert, gebildet. Dies hat den Vorteil, dass vom Integritätswert nicht auf eine Konfiguration des ersten Systems geschlossen werden kann. Die Nonce kann außerdem beispielsweise zusammen mit den Messwerten und Messinformationen bereitgestellt werden.

In einer vorteilhaften Ausführungsform des Verfahrens umfasst die zweite Integritätsinformation eine Information über einen Sicherheitsstatus des ersten Systems.

Die Bestätigungsvorrichtung kann insbesondere eine zweite Integritätsinformation derart bereitstellen, dass darin neben der Integritätsbestätigung der ersten Integritätsinformation auch eine Information über den Sicherheitsstatus des ersten Systems erfasst ist. In anderen Worten, es wird von der Bestätigungsvorrichtung die Integrität des ersten Systems geprüft und, durch die inhaltliche Auswertung der ersten Integritätsinformation, der Sicherheitsstatus ermittelt und darüber eine Information bereitgestellt. Die Informationen über den Sicherheitsstatus können beispielsweise veraltete Softwareversionen, Installationsstatus von Sicherheitsupdates etc. umfassen. Es kann folglich neben der Integritätsbestätigung eine Aussage über die Sicherheitsstufe, auf der sich das erste System bei der Überprüfung befindet, ausgestellt werden.

In einer vorteilhaften Ausführungsform des Verfahrens erfolgt ein Datenaustausch zwischen dem ersten System und dem zweiten System, nachdem in der Bestätigungsvorrichtung die Integrität und/oder die Konfiguration des ersten Systems für gültig erklärt ist.

Das erste System bestätigt gegenüber einem zweiten System seine Integrität, wobei die Bestätigungsvorrichtung die Integritätsprüfung und Bestätigung übernimmt. Wenn die Integrität des ersten Systems validiert ist, kann in diesem eine Schnittstelle freigegeben werden, um einen Datenaustausch mit dem zweiten System zu initialisieren. Dies ist vorteilhaft, um beispielweise erst bei bestätigter Vertrauenswürdigkeit einen gesicherten Datentransfer zu ermöglichen. Beispielsweise kann abhängig von der ausgestellten zweiten Integritätsbestätigung ein Datenaustausch einer bestimmten Kategorie von Daten zugelassen werden. So kann zum Beispiel abhängig von der Bestätigung ein Austausch von als "vertraulich" gekennzeichneten Daten zugelassen oder gesperrt werden, oder lediglich ein Austausch von als "intern" gekennzeichneten Daten.

Gemäß einem weiteren Aspekt betrifft die Erfindung eine Bestätigungsvorrichtung zur rechnergestützten Prüfung und kryptografischen Bestätigung mindestens eines Systemzustands eines ersten Systems, umfassend:
- ein Empfangsmodul, das derart ausgebildet ist, eine erste Integritätsinformation des ersten Systems zu empfangen,
- ein Speichermodul, das derart ausgebildet ist, die erste Integritätsinformation zu speichern,
- ein erstes Prüfmodul, das derart ausgebildet ist, die erste Integritätsinformation gegenüber einer ersten Prüfvorschrift zu prüfen,
- ein Bereitstellungsmodul, das derart ausgebildet ist, eine zweite Integritätsinformation bereitzustellen, die mindestens einen Teil der ersten Integritätsinformation umfasst,
   und
- ein zweites Vertrauensmodul, das derart ausgebildet ist, die zweite Integritätsinformation kryptografisch zu bestätigen.

Die Bestätigungsvorrichtung kann beispielsweise einen Dienst zur Attestierung der Integrität eines ersten Systems gegenüber einem zweiten System bereitstellen. Die Bestätigungsvorrichtung kann beispielsweise als Cloud-basierter Dienst realisiert sein. Es kann beispielsweise eine zentrale Einrichtung, beispielsweise ein Server, sein, welche eine Integritätsprüfung und Bestätigung eines anderen Systems erlaubt. Die Bestätigungsvorrichtung überprüft die erste Integritätsinformation und erstellt und bestätigt eine zweite Integritätsinformation, die vorzugsweise einem zweiten System bereitgestellt werden kann. Mit der Bestätigungsvorrichtung wird daher insbesondere eine mehrstufige Integritätsbestätigung erreicht. Die Bestätigungsvorrichtung kann vorzugsweise zwischen zwei miteinander kommunizierenden Systemen geschaltet werden, so dass diese sich gegenseitig die Integrität bestätigen können, wobei lediglich zulässige oder lediglich benötigte Information über das jeweilige andere System übermittelt wird. Die Bestätigung und Prüfung erfolgt erfindungsgemäß in der Bestätigungsvorrichtung, welches eine zweite Integritätsinformation, wie z.B. eine Zusammenfassung der ersten Integritätsinformation, bereitstellt. Es wird insbesondere die zweite Integritätsinformation, die mindestens einen Teil einer ersten Integritätsinformation eines ersten Systems, einem anderen System bereitgestellt.

Gemäß einem weiteren Aspekt betrifft die Erfindung ein erstes System, umfassend:
- ein Integritätserfassungsmodul, das derart ausgebildet ist, eine erste Integritätsinformation des ersten Systems, die einen Integritätswert, mindestens einen Messwert und mindestens eine Messinformation umfasst, zu erfassen, wobei
   - eine Messeinheit bei mindestens einer Messung des mindestens einen Systemzustands mindestens einen Messwert und mindestens eine Messinformation erfasst
      und
   - eine Integritätseinheit einen Integritätswert abhängig vom mindestens einen Messwert bildet,
- ein erstes Vertrauensmodul, das derart ausgebildet ist, die erste Integritätsinformation zu bestätigen,
- ein Übertragungsmodul, das derart ausgebildet ist, die erste Integritätsinformation an eine Bestätigungsvorrichtung zu übertragen
   und
- ein zweites Prüfmodul, das derart ausgebildet ist, eine zweite Integritätsinformation, die mindestens einen Teil der ersten Integritätsinformation umfasst, gegenüber einer zweiten Prüfvorschrift zu prüfen.

Ein erstes System kann beispielsweise ein Gateway eines industriellen Netzwerks sein. Das erste System erfasst seine Integrität mittels eines Integritätserfassungsmoduls. Das Integritätserfassungsmodul kann beispielsweise eine Messeinheit und eine Integritätseinheit umfassen. Ein Übertragungsmodul stellt eine erste Integritätsinformation einer Bestätigungsvorrichtung bereit. Die Bestätigungsvorrichtung kann beispielsweise dem ersten System mit der zweiten Integritätsinformation die Integrität bestätigen, wie z.B. die Aktivität und Aktualität eines Virusscanners attestieren. Um die zusammengefasste zweite Integritätsinformation prüfen zu können, umfasst das erste System insbesondere ein zweites Prüfmodul, welches die zweite Integritätsinformation überprüfen kann. Insbesondere ist das zweite Prüfmodul derart konfiguriert, die Zusammenfassung der ersten Integritätsinformation gegenüber einer zweiten Prüfvorschrift zu prüfen.

In einer vorteilhaften Ausführungsform umfasst das erste System eine erfindungsgemäße Bestätigungsvorrichtung.

Die Bestätigungsvorrichtung kann in einem ersten System, z.B. ein Gateway, integriert sein. Es ist auch möglich, dass die Bestätigungsvorrichtung mit dem ersten System derart verbunden ist, dass es als Sicherheitsmodul des ersten Systems fungiert. In anderen Worten, die Bestätigungsvorrichtung übernimmt nach dem erfindungsgemäßen Verfahren die Integritätsbestätigung des ersten Systems und kann somit beispielsweise als Hardware-Sicherheitsmodul des ersten Systems realisiert sein. Dies ist insbesondere vorteilhaft, da die Integritätsbestätigung und Prüfung, d.h. insbesondere die Auswertung der Messinformation, gegenüber einem zweiten System effizient in einem System erfolgen kann. Es ist denkbar, dass die zweite Integritätsinformation vorzugsweise auch einem zweiten System zur Prüfung bereitgestellt wird.

Gemäß einem weiteren Aspekt betrifft die Erfindung ein zweites System umfassend ein drittes Prüfmodul, das derart ausgebildet ist, eine zweite Integritätsinformation, die mindestens einen Teil der ersten Integritätsinformation umfasst, gegenüber einer dritten Prüfvorschrift zu prüfen.

Ein zweites System kann beispielsweise ein Gateway in einem Datennetz sein, zwischen dem und einem ersten System ein Datenaustausch erfolgen soll. Dazu wird insbesondere zunächst eine Prüfung der Integrität des ersten Systems in der Bestätigungsvorrichtung durchgeführt und dem zweiten System diese Information bereitgestellt. Das zweite System kann beispielsweise auch Module des beschriebenen ersten Systems umfassen, so dass insbesondere eine gegenseitige Integritätsüberprüfung über die Bestätigungsvorrichtung erfolgen kann.

Ein weiterer Aspekt der Erfindung betrifft ein Computerprogrammprodukt, das direkt in einen programmierbaren Computer oder Prozessor ladbar ist, umfassend Programmcodeteile, die dazu geeignet sind, die Schritte des Verfahrens durchzuführen.

Ausführungsbeispiele des erfindungsgemäßen Verfahrens, der Bestätigungsvorrichtung, des ersten Systems und des zweiten Systems sind in den Zeichnungen beispielhaft dargestellt und werden anhand der nachfolgenden Beschreibung näher erläutert. Es zeigen:
- Fig. 1: ein Ablaufdiagramm des erfindungsgemäßen Verfahrens zur rechnergestützten Prüfung und Bestätigung mindestens eines Systemzustands eines ersten Systems durch eine Bestätigungsvorrichtung;
- Fig. 2: eine beispielhafte Darstellung eines Kommunikationsnetzwerkes mit Ausführungsbeispielen der erfindungsgemäßen Bestätigungsvorrichtung, des ersten Systems und zweiten Systems zum Durchführen des erfindungsgemäßen Verfahrens;
- Fig. 3: eine beispielhafte Darstellung des erfindungsgemäßen Verfahrens zur rechnergestützten Prüfung und Bestätigung mindestens eines Systemzustands eines ersten Systems durch eine Bestätigungsvorrichtung;
- Fig. 4: eine schematische Darstellung eines Ausführungsbeispiels der erfindungsgemäßen Bestätigungsvorrichtung;
- Fig. 5: eine schematische Darstellung eines Ausführungsbeispiels des ersten Systems; und
- Fig. 6: eine schematische Darstellung eines Ausführungsbeispiels einer zweiten Integritätsinformation.

Einander entsprechende Teile sind in allen Figuren mit den gleichen Bezugszeichen versehen.

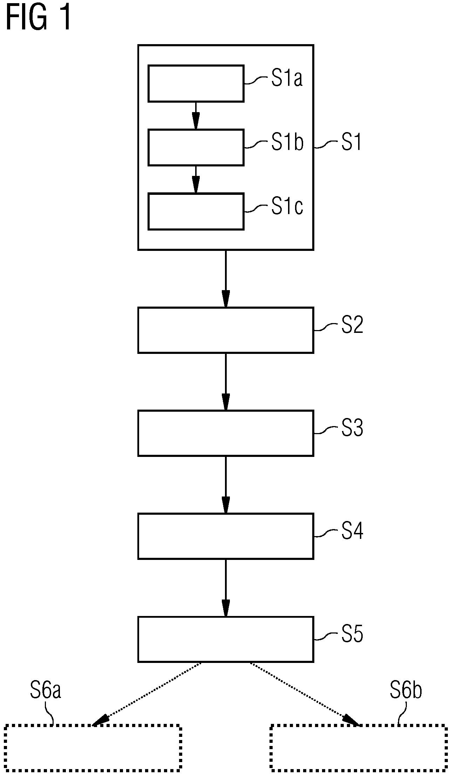

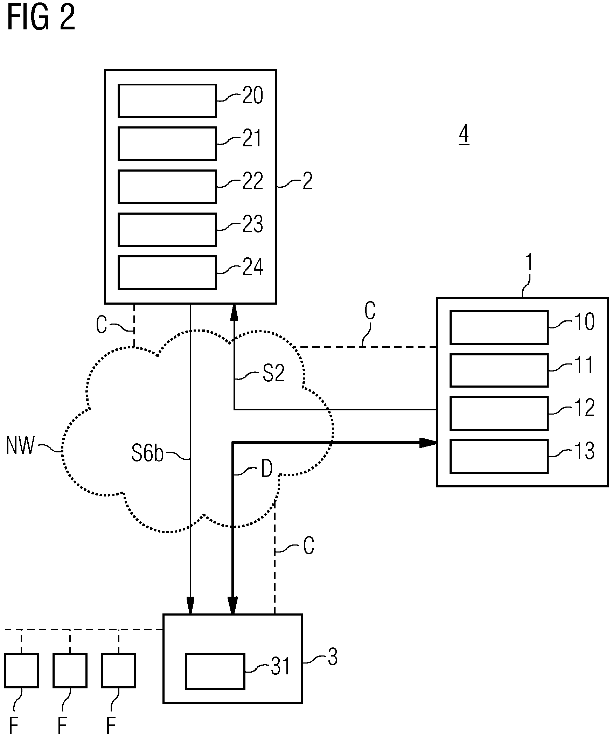

Figur 1 zeigt ein Ablaufdiagramm des erfindungsgemäßen Verfahrens zur rechnergestützten Prüfung und Bestätigung mindestens eines Systemzustands eines ersten Systems 1 durch eine Bestätigungsvorrichtung 2, insbesondere gegenüber einem zweiten System 3, mit den folgenden Verfahrensschritten. Die Bestätigungsvorrichtung 2, das erste System 1 und das zweite System 3 sind beispielhaft in Figur 2 dargestellt.

Im ersten Schritt S1 wird im ersten System 1 eine erste Integritätsinformation des ersten Systems 1 ermittelt. Die erste Integritätsinformation umfasst einen Integritätswert, mindestens einen Messwert und eine dazugehörige Messinformation. Der mindestens eine Messwert und die dazugehörige Messinformation können beispielsweise in einer Liste vorliegen. Es wird mindestens eine Messung eines Systemzustands durchgeführt und dabei ein Messwert und die Messinformation erfasst, siehe Schritt S1a. Der Integritätswert wird über den mindestens einen Messwert gebildet, siehe Schritt S1b. Der Integritätswert wird beispielsweise über einzelne Messwerte mittels einer Hash-Funktion gebildet. Der Integritätswert wird vorzugsweise aktualisiert, wenn eine neue Messung vorliegt, d.h. es werden Messungen nacheinander verarbeitet. Die Messwerte und Messinformation werden beispielsweise in einer Liste als Teil der ersten Integritätsinformation übermittelt.

Der Integritätswert wird insbesondere abhängig von dem mindestens einen Messwert gebildet. Der Integritätswert kann beispielsweise auch über Messungen und mindestens eine Nonce, z.B. eine Zufallszahl, gebildet werden. Folglich kann die erste Integritätsinformation demnach auch die Nonce umfassen. Die Nonce kann vom ersten System 1 oder von der Bestätigungsvorrichtung 2 bereitgestellt werden. Somit kann von einem Integritätswert nicht auf eine zugeordnete Konfiguration eines Systems geschlossen werden. Der Integritätswert wird von einem Vertrauensmodul 12 des ersten Systems 1 bestätigt, z.B. digital signiert, siehe Schritt S1c.

Im nächsten Schritt S2 wird die erste Integritätsinformation an die Bestätigungsvorrichtung 2 übertragen. Die Bestätigungsvorrichtung 2 kann beispielsweise ein Cloud-basiertes oder zentrales System sein, welches die Integritätsprüfung und Bestätigung eines ersten Systems 1 beispielsweise gegenüber einem Kommunikationspartner durchführt.

Im nächsten Schritt S3 wird die erste Integritätsinformation in der Bestätigungsvorrichtung 2 gegenüber einer ersten Prüfvorschrift geprüft. Die Prüfung kann eine Überprüfung des Integritätswerts und eine inhaltliche Überprüfung oder Auswertung der Integritätsinformation umfassen. Beim Integritätswert wird beispielsweise die Bestätigung, d.h. die digitale Signatur, überprüft. Eine inhaltliche Überprüfung, also eine Prüfung, wie die dem Integritätswert zugrunde liegende Messungen zustande kamen, erfolgt anhand der Messwerte und der Messinformation. Vorzugsweise stellt das erste System 1 eine erste Integritätsinformation aus, welche detaillierte Informationen über die Systemkonfiguration und den Systemzustand enthält. Die Bestätigungsvorrichtung 2 kann folglich eine detaillierte Auswertung des mindestens einen Systemzustands und/oder Konfiguration des ersten Systems 1 durchführen.

Im nächsten Schritt S4 wird von der Bestätigungsvorrichtung 2 eine zweite Integritätsinformation bereitgestellt, welche mindestens einen Teil der ersten Integritätsinformation umfasst. Nach der Prüfung stellt die Bestätigungsvorrichtung 2 eine zweite Integritätsinformation aus. Die zweite Integritätsinformation kann eine Zusammenfassung oder abstrahierte Version der ersten Integritätsinformation darstellen. Beispielsweise können in der zweiten Integritätsinformation lediglich zulässige Informationen enthalten sein.

Eine zulässige Information kann beispielsweise eine Information sein, für die ein zweites System 3 eine Berechtigung hat. Eine zulässige Information kann auch eine Information sein, die gegenüber einer Prüfvorschrift geprüft wird und für gültig erklärt ist. Insbesondere kann eine zulässige Information vorgegeben sein, z.B. kann abhängig von einem Systemzustand eines zweiten Systems 3 eine Information zugelassen sein. Beispielsweise kann ein System sich in einem Wartungszustand befinden und deshalb nur die Berechtigung haben, eingeschränkte Informationen zu erhalten. Insbesondere wenn die Bestätigungsvorrichtung 2 die zweite Integritätsinformation für ein zweites System 3 ausstellt, welches lediglich begrenzte Rechte hat, kann mittels der zweiten Integritätsinformation eine Aussage über die Integrität des ersten Systems gemacht werden, ohne dass vertrauliche Informationen des ersten Systems offengelegt werden.

Im Schritt S5 wird durch ein zweites Vertrauensmodul 24 der Bestätigungsvorrichtung 2 die zweite Integritätsinformation attestiert. Damit liegt eine Integritätsinformation des ersten Systems 1 vor, welche insbesondere lediglich zulässige oder benötigte Informationen enthält. Beispielsweise kann darin bestätigt sein, dass ein Betriebssystem einer bekannten Distribution vorliegt oder dass die installierte Software aktuell ist, wobei detaillierte Informationen über installierte Software nicht aufgeführt werden.

In einem vorteilhaften Schritt S6a kann die zweite Integritätsinformation dem ersten System 1 bereitgestellt werden. Das ermöglicht, dass das erste System 1 die eigene Integrität überprüfen kann. Das erste System 1 prüft folglich die zweite, beispielsweise abstrahierte, Integritätsinformation gegenüber einer zweiten Prüfvorschrift. Dies kann beispielsweise vorteilhaft sein, wenn das erste System 1 lediglich eine schnelle und beschränkte Überprüfung von Systemzuständen durchführen soll. Die Prüfung ergibt, ob die Integrität des ersten Systems 1 bestätigt oder ungültig ist. Wenn die Prüfung ergibt, dass Schwachstellen im ersten System 1 vorhanden sind, kann die Bestätigungsvorrichtung 2 dem ersten System 1 Information darüber übermitteln. Beispielsweise kann in so einem Fall die zweite Integritätsinformation eine negative Integritätsbestätigung enthalten. Dieser Verfahrensschritt ist vorteilhaft, wenn das erste System 1 beispielsweise eine Netzwerkschnittstelle aktivieren soll, nur wenn es sich in einem vertrauenswürdigen Zustand befindet.

In einem alternativen, vorteilhaften Schritt S6b kann die zweite Integritätsinformation einem zweiten System 3 bereitgestellt werden. Die Bestätigungsvorrichtung 2 erstellt vorzugsweise eine zweite Integritätsinformation, die dem zweiten System 3 die Integrität des ersten Systems 1 bestätigt. Im zweiten System 3 kann in einem dritten Prüfmodul 31, wie in Figur 2 beispielhaft gezeigt, eine Prüfung der zweiten Integritätsinformation gegenüber einer dritten Prüfvorschrift erfolgen. Dieser Verfahrensschritt ist insbesondere dann vorteilhaft, wenn zwei Systeme 1 und 3 sich vor einem Datenaustausch gegenseitig ihre Integrität bestätigen müssen. Dabei kann die Bestätigungsvorrichtung 2 zentral die Prüfung und Bestätigung der Integrität übernehmen und eine zweite, abstrahierte Integritätsinformation ausstellen. Insbesondere kann die zweite Integritätsinformation abhängig von einem der Systeme, z.B. dessen Zustand, Sicherheitsstatus oder Rechten, ausgestellt werden.

In Figur 2 sind schematisch ein Kommunikationsnetzwerk 4 mit dem ersten System 1, der Bestätigungsvorrichtung 2 und dem zweiten System 3 gezeigt, die derart ausgebildet sind, das erfindungsgemäße Verfahren durchzuführen. Die zwei Systeme 1, 3 und die Bestätigungsvorrichtung sind miteinander über Kommunikationsverbindungen C mit einem Netzwerk NW verbunden und können somit miteinander kommunizieren. Beispielsweise kann dies ein industrielles Datennetz sein. Es ist eine Integritätsbestätigung des ersten Systems 1 gemäß dem Verfahren gegenüber dem zweiten System 3 gezeigt, wobei die Bestätigungsvorrichtung 2 die Prüfung und Bestätigung der Integrität durchführt. Das zweite System 3 ist beispielsweise ein Gateway, welches mit Feldgeräten F eines Netzwerks verbunden ist. Daten der Feldgeräte F sollen mit dem ersten System 1 ausgetauscht werden. Dazu ist zunächst eine Integritätsattestierung des ersten Systems 1 erforderlich. Die Bestätigungsvorrichtung 2 stellt beispielsweise einen zentralen Integritätsattestierungsdienst bereit.

Das erste System 1 stellt zunächst die erste Integritätsinformation bereit, die durch ein Vertrauensmodul 11 im ersten System 1 bestätigt wird. Die erste Integritätsinformation wird der Bestätigungsvorrichtung 2, beispielsweise über das Netzwerk NW, übertragen, siehe Schritt S2.

Das Empfangsmodul 20 der Bestätigungsvorrichtung 2 empfängt die erste Integritätsinformation vom ersten System 1. Die erste Integritätsinformation kann im Speichermodul 21 gespeichert oder lediglich zwischengespeichert werden, so dass die Information für eine Prüfung und Auswertung der Konfiguration des ersten Systems 1 vorliegt. Im ersten Prüfmodul 22 der Bestätigungsvorrichtung 2 wird eine Prüfung der ersten Integritätsinformation gegenüber einer ersten Prüfvorschrift durchgeführt. Abhängig vom Ergebnis der Prüfung wird im Bereitstellungsmodul 23 eine zweite Integritätsinformation bereitgestellt, die z.B. eine Zusammenfassung der relevanten Informationen der ersten Integritätsinformation enthält. Durch das zweite Vertrauensmodul 24 wird die zweite Integritätsinformation kryptografisch bestätigt.

Die zweite Integritätsinformation wird dem zweiten System 3 bereitgestellt, Schritt S6b. Das zweite System 3 kann beispielsweise ein Gerät mit beschränkten Berechtigungen sein.

In anderen Worten, dem zweiten System 3 werden lediglich zulässige Informationen des ersten Systems 1 bereitgestellt. Die Bestätigungsvorrichtung 2 stellt eine zweite Integritätsinformation derart aus, dass diese lediglich zulässige Informationen enthält. In anderen Worten, die Bestätigungsvorrichtung 2 prüft die erste Integritätsinformation abhängig vom zweiten System 3 und stellt eine zweite Integritätsinformation abhängig vom zweiten System 3 aus. Beispielsweise kann dies abhängig von einem Systemzustand des zweiten Systems 3 sein. Es kann das zweite System 3 beispielsweise lediglich zusammengefasste Informationen über den Systemzustand des ersten Systems 1 anfordern, bevor ein Datenaustausch zwischen den beiden Systemen 1,3 erfolgt.

Es kann außerdem eine zweite Integritätsinformation zusammen mit einer Nonce bestätigt werden. Die Nonce kann von einem ersten System 1, von der Bestätigungsvorrichtung 2 oder von einem zweiten System 3 bereitgestellt werden. Wenn beispielsweise in der zweiten, bestätigten Integritätsinformation eine Nonce des zweiten Systems 3 enthalten ist, kann die zweite Integritätsinformation dem zweiten System 3 direkt zugeordnet werden.

Das zweite System 3 kann in einem dritten Prüfmodul 31 die zweite Integritätsinformation gegenüber einer dritten Prüfvorschrift prüfen. Demnach übergibt die Bestätigungsvorrichtung 2 dem zweiten System 3 die zweite Integritätsbestätigung des ersten Systems 1. Wenn diese im zweiten System 3 validiert ist, kann ein Datenaustausch D mit dem ersten System 1 erfolgen. Beispielsweise kann bei einer positiven Integritätsbestätigung das zweite System 3 eine Schnittstelle für einen Datenaustausch mit dem ersten System 1 freischalten. Das zweite System 3 kann insbesondere auch weitere Module enthalten. Beispielsweise kann das zweite System 3 gleiche Module wie das erste System enthalten, so dass das zweite System 3 seine Integrität einem anderen System bestätigen kann. Es kann folglich eine Bestätigungsvorrichtung 2 eine wechselseitige Integritätsattestierung mindestens zweier Systeme 1, 3 durchführen.

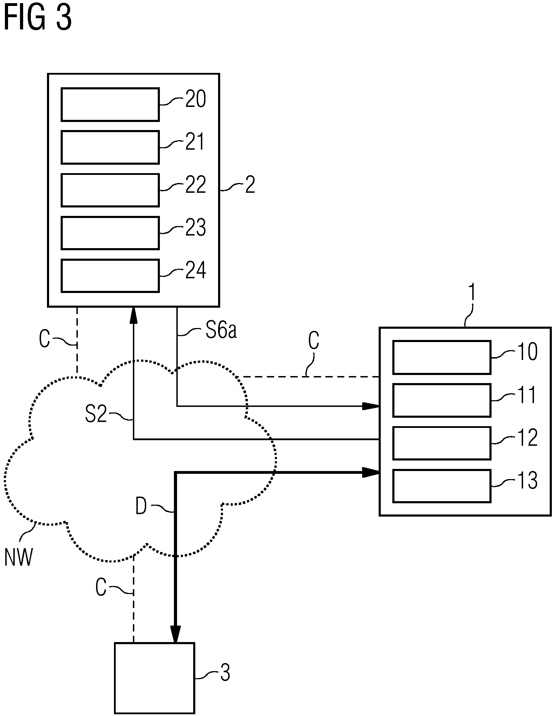

In Figur 3 ist ein Beispiel des Verfahrens dargestellt, wobei ein erstes System 1 eine zweite Integritätsinformation der Bestätigungsvorrichtung 2 erhält, um die eigene Integrität zu überprüfen, bevor ein Datenaustausch D mit einem zweiten System 3 durchgeführt wird. Das erste System 1 erfasst die erste Integritätsinformation in einem Integritätserfassungsmodul 10, bestätigt diese durch ein Vertrauensmodul 11 und übermittelt sie an die Bestätigungsvorrichtung 2 durch ein Übertragungsmodul 12. Die Module des ersten Systems 1 können vorteilhaft alle miteinander verbunden sein. Die Bestätigungsvorrichtung 2 ermittelt nach erfolgreicher Prüfung eine zweite Integritätsinformation und bestätigt diese kryptografisch. Beispielsweise können in der zweiten Integritätsinformation Informationen zum Systemzustand des ersten Systems 1, z.B. ob ein bestimmtes Betriebssystem läuft, enthalten sein. Diese zweite Integritätsinformation wird in Schritt S6a dem ersten System 1 wieder bereitgestellt. Das erste System 1 kann die zweite Integritätsinformation in einem zweiten Prüfmodul 13 prüfen. Dazu kann das erste System die zweite Integritätsinformation auswerten und bei positiver Integritätsbestätigung den Datenaustausch mit dem zweiten System 3 freigeben, d.h. beispielsweise kann eine Schnittstelle für eine Datenübertragung D im ersten System 1 aktiviert werden.

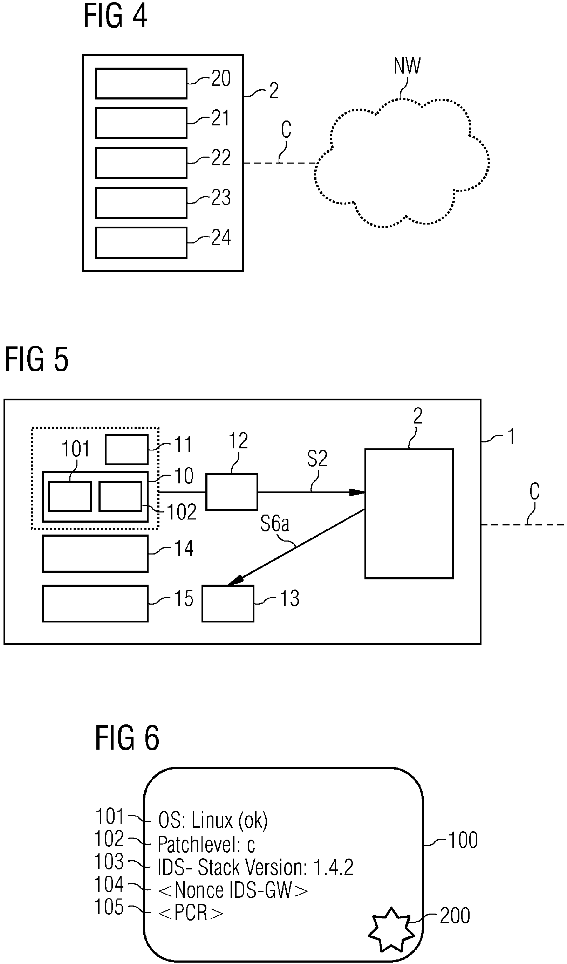

In Figur 4 ist schematisch ein Beispiel für die erfindungsgemäße Bestätigungsvorrichtung 2 dargestellt. Die Bestätigungsvorrichtung 2 umfasst ein Empfangsmodul 20, ein Speichermodul 21, ein erstes Prüfmodul 22, ein Bereitstellungsmodul 23 und ein zweites Vertrauensmodul 24. Die Module der Bestätigungsvorrichtung 2 können vorteilhaft alle miteinander verbunden sein. Des Weiteren kann eine Bestätigungsvorrichtung 2 einen Prozessor, einen Speicher und ein Betriebssystem (nicht dargestellt) umfassen, um die Schritte des Verfahrens zum rechnergestützten Prüfen und Bestätigen der Integrität eines Systems durchzuführen. Über eine Kommunikationsverbindung C kann die Bestätigungsvorrichtung 2 mit einem Netzwerk NW verbunden sein oder es kann in einem ersten System 1 integriert ausgebildet sein. Insbesondere kann die Bestätigungsvorrichtung 2 eine Schnittstelle oder ein Sendemodul (nicht dargestellt) umfassen, um die zweite Integritätsinformation einem System zu übermitteln.

Figur 5 zeigt ein Ausführungsbeispiel des ersten Systems 1, welches eine Bestätigungsvorrichtung 2 umfasst. Das erste System 1 kann beispielsweise eine integrierte Bestätigungsvorrichtung 2 für die Integritätsattestierung umfassen. Beispielsweise ist die Bestätigungsvorrichtung 2 ein im ersten System 1 oder mit dem ersten System 1 verbundenes Hardware-Sicherheitsmodul oder ein Krypto-Controller. Die Bestätigungsvorrichtung 2 kann unabhängig vom ersten System 1 sein, d.h. beispielsweise nicht an das interne Datennetz des ersten Systems angeschlossen sein, um z.B. nicht kompromittierbar zu sein. Das erste System 1 enthält ein Integritätserfassungsmodul 10, Vertrauensmodul 11, ein Übertragungsmodul 12, ein Prüfmodul 13, einen Prozessor 14, einen Speicher 15 und kann über eine Kommunikationsverbindung C mit einem Netzwerk NW verbunden sein. Das Integritätserfassungsmodul kann insbesondere eine Messeinheit 110 und eine Integritätseinheit 120 umfassen. Die Messeinheit 110 und die Integritätseinheit 120 können auch unabhängig vom Integritätserfassungsmodul 10 ausgebildet sein. Die Messeinheit 110 führt Messungen der Zustände der ersten Systems 1 und stellt diese als Messwerte und dazugehörige Messinformation bereit. Beispielsweise können die Messungen vom Betriebssystem oder einer speziellen Software gesteuert werden. Die Integritätseinheit 120 bildet einen Integritätswert abhängig von den Messwerten, z.B. über eine Hash-Funktion. Des Weiteren können ein Betriebssystem und verschiedene Applikationen im ersten System 1 installiert sein (nicht dargestellt). Alle Module können im ersten System 1 miteinander vorteilhafter Weise verbunden sein.

Vom Integritätserfassungsmodul 10 werden Messwerte erfasst, als Integritätswert vom Vertrauensmodul 11 bestätigt und zusammen mit der Messinformation als erste Integritätsinformation dem zweiten System 3 bereitgestellt, siehe Schritt S2 in Figur 1. Die, beispielsweise integrierte, Bestätigungsvorrichtung 2 führt eine Prüfung der ersten Integritätsinformation durch und erstellt abhängig davon eine zweite Integritätsinformation. Diese zweite Integritätsinformation wird in der Bestätigungsvorrichtung kryptografisch bestätigt und an das zweite Prüfmodul 13 des ersten Systems 1 übermittelt, siehe Schritt S6b in Figur 1.

Das zweite Prüfmodul 13 ermittelt anhand der zweiten Integritätsinformation und gegenüber einer zweiten Prüfvorschrift, ob das erste System 1 sich in einem vertrauenswürdigen Systemzustand befindet. Wenn die Prüfung die Integrität des ersten Systems 1 für gültig erklärt wird das erste System 1 eine Schnittstelle für eine Datenübertragung freischalten. Die zweite Integritätsinformation kann zusätzlich an ein zweites System 3 übermittelt werden.

Figur 6 zeigt in schematischer Darstellung ein Beispiel für eine zweite Integritätsinformation 100. Die zweite Integritätsinformation kann beispielsweise als Textdatei, als Abstract-Syntax-Notation-One-Daten, auch als ASN.1-Daten bekannt, als Extensible-Markup-Language-Daten, auch als XML-Daten bekannt, oder als JavaScript-Object-Notation-Daten, auch als JSON-Daten bekannt, codiert sein. Die zweite Integritätsinformation kann insbesondere dem ersten System 1 zugeordnet werden, z.B. über eine Identifizierungsinformation oder den Integritätswert.

Nach der Prüfung der ersten Integritätsinformation, d.h. des Integritätswerts, der Messwerte und Messinformationen des ersten Systems 1, wird von der Bestätigungsvorrichtung 2 abhängig von der Prüfung eine zusammengefasste Integritätsbestätigung als zweite Integritätsinformation ausgegeben. Diese kann mit einer digitalen Signatur 200 im zweiten Vertrauensmodul 24 bestätigt werden. Die Figur 6 zeigt ein Beispiel einer solchen Zusammenfassung der ersten Integritätsinformation als zweite Integritätsinformation 100. Darin wird beispielsweise bestätigt, dass ein Linux-Betriebssystem in einer bekannten Distribution vorliegt 101 und dass der Patchlevel 102 aktuell ist. Der Eintrag 103 bestätigt beispielsweise die Version des IDS-Software-Stacks. Optional können weitere Informationen enthalten sein, wie z.B. ein Nonce-Wert 104 des zweiten Systems 3, z.B. eines IDS-Gateways, dem die Attestierung in Form der zweiten Integritätsinformation 100 bereitgestellt wird, und der Integritätswert 105, PCR, der ursprünglichen ersten Integritätsinformation. Letzteres ermöglicht zum Beispiel eine eindeutige Zuordnung der bestätigten zweiten Integritätsinformation zu einem bestimmten Integritätswert. Dadurch kann auch die ursprünglich ausgestellte erste Integritätsinformation mit dem darin enthaltene Integritätswert vom zweiten System 3 geprüft werden.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Verfahren zur rechnergestützten Prüfung und kryptografischen Bestätigung mindestens eines Systemzustands eines ersten Systems (1) durch eine Bestätigungsvorrichtung (2) mit den Verfahrensschritten:
- Erfassen (S1) einer ersten Integritätsinformation des ersten Systems (1), die einen Integritätswert, mindestens einen Messwert und mindestens eine Messinformation umfasst, wobei
- bei mindestens einer Messung des mindestens einen Systemzustands der mindestens eine Messwert und die mindestens eine Messinformation erfasst werden (S1a),
- der Integritätswert abhängig von dem mindestens einen Messwert gebildet wird (S1b),
- der Integritätswert durch ein erstes Vertrauensmodul (11) des ersten Systems (1) kryptografisch bestätigt wird (S1c),
- Übertragen (S2) der ersten Integritätsinformation an die Bestätigungsvorrichtung (2),
- Prüfen (S3) der ersten Integritätsinformation in der Bestätigungsvorrichtung (2) gegenüber einer ersten Prüfvorschrift,
- Ausgeben (S4) einer zweiten Integritätsinformation, die mindestens einen Teil der ersten Integritätsinformation umfasst,
und
- kryptografisches Bestätigen (S5) der zweiten Integritätsinformation durch ein zweites Vertrauensmodul (24) in der Bestätigungsvorrichtung (2).

2. Verfahren nach Anspruch 1, wobei die zweite Integritätsinformation eine Zusammenfassung und/oder Verallgemeinerung der ersten Integritätsinformation umfasst.

3. Verfahren nach einem der Ansprüche 1 oder 2, wobei die bestätigte zweite Integritätsinformation dem ersten System (1) bereitgestellt und im ersten System (1) gegenüber einer zweiten Prüfvorschrift geprüft wird (S6a).

4. Verfahren nach einem der Ansprüche 1 oder 2, wobei die bestätigte zweite Integritätsinformation einem zweiten System (3) bereitgestellt und im zweiten System (3) gegenüber einer dritten Prüfvorschrift geprüft wird (S6b).

5. Verfahren nach einem der vorangehenden Ansprüche, wobei die Bestätigungsvorrichtung (2) Schwachstellen des ersten Systems (1) anhand der ersten Integritätsinformation erkennt und eine Information über die Schwachstelle an das erste System (1) übermittelt.

6. Verfahren nach einem der vorangehenden Ansprüche, wobei die erste Integritätsinformation in der Bestätigungsvorrichtung (2) abhängig von einem zweiten System (3), dem die zweite Integritätsinformation bereitgestellt wird, geprüft wird und die zweite Integritätsinformation abhängig vom zweiten System (3) ausgegeben wird.

7. Verfahren nach einem der vorangehenden Ansprüche, wobei die zweite Integritätsinformation zusammen mit einer Nonce durch ein zweites Vertrauensmodul (24) in der Bestätigungsvorrichtung (2) bestätigt wird.

8. Verfahren nach einem der vorangehenden Ansprüche, wobei der Integritätswert über Messungen des Systemzustands des ersten Systems (1) und über mindestens eine Nonce gebildet wird.

9. Verfahren nach einem der vorangehenden Ansprüche, wobei die zweite Integritätsinformation eine Information über einen Sicherheitsstatus des ersten Systems (1) umfasst.

10. Verfahren nach einem der vorangehenden Ansprüche, wobei ein Datenaustausch (D) zwischen dem ersten System (1) und dem zweiten System (3) erfolgt, nachdem in der Bestätigungsvorrichtung (2) die Integrität und/oder die Konfiguration des ersten Systems (1) für gültig erklärt ist.

11. Bestätigungsvorrichtung zur rechnergestützten Prüfung und kryptografischen Bestätigung mindestens eines Systemzustands eines ersten Systems (1), umfassend:
- ein Empfangsmodul (20), das derart ausgebildet ist, eine erste Integritätsinformation des ersten Systems (1) zu empfangen,
- ein Speichermodul (21), das derart ausgebildet ist, die erste Integritätsinformation zu speichern,
- ein erstes Prüfmodul (22), das derart ausgebildet ist, die erste Integritätsinformation gegenüber einer ersten Prüfvorschrift zu prüfen,
- ein Bereitstellungsmodul (23), das derart ausgebildet ist, eine zweite Integritätsinformation bereitzustellen, die mindestens einen Teil der ersten Integritätsinformation umfasst, und
- ein zweites Vertrauensmodul (24), das derart ausgebildet ist, die zweite Integritätsinformation kryptografisch zu bestätigen.

12. Erstes System umfassend:
- ein Integritätserfassungsmodul (10), das derart ausgebildet ist, eine erste Integritätsinformation des ersten Systems (1), die einen Integritätswert, mindestens einen Messwert und mindestens eine Messinformation umfasst, zu erfassen, wobei
- eine Messeinheit (110) bei mindestens einer Messung des mindestens einen Systemzustands mindestens einen Messwert und mindestens eine Messinformation erfasst und
- eine Integritätseinheit (120) einen Integritätswert abhängig vom mindestens einen Messwert bildet,
- ein erstes Vertrauensmodul (11), das derart ausgebildet ist, die erste Integritätsinformation zu bestätigen,
- ein Übertragungsmodul (12), das derart ausgebildet ist, die erste Integritätsinformation an eine Bestätigungsvorrichtung zu übertragen
und
- ein zweites Prüfmodul (13), das derart ausgebildet ist, eine zweite Integritätsinformation, die mindestens einen Teil der ersten Integritätsinformation umfasst, gegenüber einer zweiten Prüfvorschrift zu prüfen.

13. Erstes System nach Anspruch 12, welches eine Bestätigungsvorrichtung nach Anspruch 11 umfasst.

14. Zweites System umfassend ein drittes Prüfmodul (31), das derart ausgebildet ist, eine zweite Integritätsinformation, die mindestens einen Teil der ersten Integritätsinformation umfasst, gegenüber einer dritten Prüfvorschrift zu prüfen.

15. Computerprogrammprodukt, das direkt in einen programmierbaren Computer ladbar ist, umfassend Programmcodeteile, die dazu geeignet sind, die Schritte des Verfahrens nach einem der Ansprüche 1 bis 10 durchzuführen.
